(19) Europäisches Patentamt

European Patent Office

Office européen des brevets

(11) **EP 2 113 003 B1**

(12) **FASCICULE DE BREVET EUROPEEN**

(45) Date de publication et mention de la délivrance du brevet:
**21.12.2011 Bulletin 2011/51**

(21) Numéro de dépôt: **08707921.6**

(22) Date de dépôt: **16.01.2008**

(51) Int Cl.:
*C08F 293/00* (2006.01)      *C08F 8/12* (2006.01)

(86) Numéro de dépôt international:
**PCT/EP2008/050429**

(87) Numéro de publication internationale:
**WO 2008/090063 (31.07.2008 Gazette 2008/31)**

(54) **COPOLYMERE DIBLOC COMPRENANT DES UNITES DERIVANT DU STYRENE ET DES UNITES DERIVANT D'ACIDE ACRYLIQUE**

DIBLOCKCOPOLYMER MIT AUS STYROL ABGELEITETEN EINHEITEN UND AUS ACRYLSÄURE ABGELEITETEN EINHEITEN

DIBLOCK COPOLYMER INCLUDING UNITS DERIVED FROM STYRENE AND UNITS DERIVED FROM ACRYLIC ACID

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **19.01.2007 FR 0700368**

(43) Date de publication de la demande:
**04.11.2009 Bulletin 2009/45**

(73) Titulaire: **Rhodia Opérations**
**93306 Aubervilliers (FR)**

(72) Inventeur: **BZDUCHA, Wojciech**
**F-92400 Courbevoie (FR)**

(56) Documents cités:
**WO-A-01/16187      WO-A-02/070861**
**WO-A-02/077075     US-A1- 2002 161 087**

**Description**

La présente invention a pour objet un nouveau copolymère dibloc comprenant des unités dérivant de styrène et des unités dérivant d'acide acrylique. Il comprend un bloc comprenant les unités dérivant de styrène, et un bloc comprenant des unités dérivant d'acide acrylique et des unités dérivant d'un acrylate d'alkyle. L'invention concerne également un procédé de préparation du copolymère.

De nombreux copolymères à blocs amphiphiles ont été décrits dans la littérature, en particulier depuis la découverte de procédés de polymérisation radicalaire contrôlée, facilitant l'accès à de tels produits. Des utilisations de certains copolymères à blocs amphiphiles dans des formulations à base aqueuse, comme émulsifiants ou co-émulsifiants ou comme dispersants ou encore comme gélifiants, ont également été décrites. Des utilisations de certains copolymères à blocs dans des compositions détergentes, dans des compositions phytosanitaires, dans des compositions de revêtements, dans des compositions de modification de surfaces ou bien dans des compositions cosmétiques, notamment dans des shampooings, ont notamment été décrites.

Toutefois il existe toujours un besoin pour de nouvelles formulations dont les fonctions et propriétés sont variées, par exemple par apport d'une nouvelle propriété ou par amélioration d'une propriété. Pour engendrer ces propriétés on peut chercher à combiner différentes matières premières connues. On peut également engendrer ces propriétés à l'aide de nouvelles matières premières, agissant seules ou en combinaison avec d'autres. Il existe donc un besoin pour de nouvelles matières premières pouvant apporter ou modifier les propriétés d'une formulation.

La présente invention répond à ce besoin en proposant un copolymère dibloc (bloc A)-(bloc B) dans lequel:

- le bloc A comprend au moins 90% en poids (par rapport au bloc A) d'unités dérivant de styrène,
- le bloc B est un bloc statistique comprenant (par rapport au bloc B):

(a) de 34 à 95% en poids, de préférence de 64 à 75%, d'unités dérivant d'acide acrylique sous forme acide ou salifiée, et
(b) de 5 à 66% en poids, de préférence de 25 à 36%, d'unités dérivant d'un acrylate d'alkyle en $C_1$-$C_4$

- la proportion pondérale du bloc B par rapport au copolymère est supérieure ou égale à 50%,
- la masse moléculaire moyenne théorique du copolymère est supérieure ou égale à 20000 g/mol, et de préférence comprise entre 20000 et 50000 g/mol.

L'invention concerne également un procédé de préparation du copolymère.

Le copolymère de l'invention présente notamment des propriétés hydratantes très importantes. Il peut ainsi trouver des applications dans l'industrie de la cosmétique.

Définitions

Dans la présente demande le terme «copolymère dibloc» se rapporte à une architecture de copolymère à blocs constitué de deux blocs, et ne présentant substantiellement pas d'autre séquence de blocs.

Dans la présente demande, on désigne par «unité dérivant d'un monomère» une unité qui peut être obtenue directement à partir dudit monomère par polymérisation. Ainsi, par exemple, une unité dérivant d'un ester d'acide acrylique ou méthacrylique ne couvre pas une unité de formule $-CH_2-CH(COOH)-$, ou $-CH_2-C(CH_3)(COOH)-$, obtenue par exemple en polymérisant un ester d'acide acrylique ou méthacrylique, puis en hydrolysant. Ainsi , la terminologie « unité dérivant d'un monomère » n'est relative qu'à la constitution finale du polymère et est indépendante du procédé de polymérisation utilisé pour synthétiser le polymère.

Dans la présente demande, le rapport en poids entre les blocs correspond au rapport entre les masses des monomères (ou mélanges de monomères) utilisés pour la préparation des blocs (en tenant compte des variations de masses liées à une hydrolyse subséquente). Les proportions en poids des blocs sont les proportions par rapport au copolymère dibloc total, et correspondent aux proportions en poids des monomères (ou mélanges de monomères) utilisés pour la préparation des blocs, par rapport à la totalité des monomères utilisés pour préparer le copolymère dibloc (en tenant compte des variations de masses liées à une hydrolyse subséquente).

Dans la présente demande, les masses et rapports liés aux blocs sont indiqués en équivalents acides (unités dérivant d'acide acrylique sous forme acide, par opposition à une forme salifiée de type acrylate de sodium).

Dans la présente demande, on entend par monomère hydrophile un monomère qui a de l'affinité pour l'eau, et qui typiquement n'est pas susceptible de former une solution macroscopique diphasique dans de l'eau distillée à 25°C, à une concentration de 1% en poids.

Dans la présente demande la masse molaire $M_A$ d'un mélange de monomères $A_1$ et $A_2$ de masses molaires respectives $M_{A1}$ et $M_{A2}$, présents en nombre respectifs de $n_{A1}$ et $n_{A2}$, désigne la masse molaire moyenne en nombre

$M_A = M_{A1} \, n_{A1} / (n_{A1} + n_{A2}) + M_{A2} \, n_{A2} / (n_{A1} + n_{A2})$. La masse molaire d'un <u>mélange d'unités</u> dans une chaîne macromoléculaire ou une partie de chaîne macromoléculaire (un bloc par exemple) est définie pareillement, avec les masses molaires de chacune des unités et le nombre de chacune des unités.

Dans la présente demande, la <u>masse moléculaire moyenne mesurée</u> d'un premier bloc ou d'un copolymère désigne la masse moléculaire moyenne en nombre en équivalents polystyrène d'un bloc ou d'un copolymère, mesurée par chromatographie d'exclusion stérique (SEC), dans du THF, avec une calibration à l'aide d'étalons de polystyrène. La masse moléculaire moyenne mesurée d'un même bloc dans un copolymère à n blocs est définie comme la différence entre la masse moléculaire moyenne mesurée du copolymère et la masse moléculaire moyenne mesurée du copolymère à (n-1) blocs à partir duquel il est préparé.

Par soucis de simplicité, il est fréquent d'exprimer les <u>masses moléculaires moyennes des blocs en masses moléculaires moyennes "théoriques" ou "visées"</u>, en considérant une polymérisation complète et parfaitement contrôlée. Dans ce cas il se forme une chaîne macromoléculaire par fonction de transfert d'un agent de transfert; pour obtenir la masse moléculaire il suffit de multiplier la masse molaire moyenne des unités d'un bloc par le nombre d'unités par bloc (quantité en nombre de monomère par quantité en nombre d'agent de transfert). On peut négliger dans ces calculs les différences induites par de faibles quantités de co-momonères comme l'acide méthacrylique. Les masses moléculaires moyennes théoriques ou visées du bloc B sont exprimées en considérant une hydrolyse totale (on exprime les masses avec la fiction d'un taux d'hydrolyse de 1). La masse moléculaire moyenne théorique $M_{bloc}$ d'un bloc, est typiquement calculée selon la formule suivante:

$$ M_{bloc} = \sum_i M_i * \frac{n_i}{n_{precursor}} \, , $$

où $M_i$ est la masse molaire d'un monomère i, $n_i$ est le nombre de moles du monomère i, $n_{precursor}$ est le nombre de moles de fonctions auquel sera liée la chaîne macromoléculaire du bloc. Les fonctions peuvent provenir d'un agent de transfert (ou un groupe de transfert) ou un amorceur, un bloc précédent etc. S'il s'agit d'un bloc précédent, le nombre de moles peut être considéré comme le nombre de moles d'un composé auquel la chaîne macromoléculaire dudit bloc précédent a été liée, par exemple un agent de transfert (ou un groupe de transfert) ou un amorceur. En pratique, les masses moléculaires moyennes théoriques sont calculées à partir du nombre de moles de monomères introduits et du nombre de moles de précurseur introduit.

La <u>masse moléculaire moyenne "théorique" ou "visée" d'un copolymère à blocs</u>, est considérée comme l'addition des masses moléculaires moyennes de chacun des blocs, en considérant une hydrolyse totale (on exprime les masses avec la fiction d'un taux d'hydrolyse de 1), si une telle hydrolyse a été effectuée.

Dans la présente demande, on définit la <u>masse totale visée ou théorique d'un bloc</u> comme la masse de la chaîne macromoléculaire en considérant une polymérisation complète et parfaitement contrôlée. Pour obtenir la masse total il suffit de multiplier la masse molaire d'une unité d'un bloc par le nombre par bloc de cette unité et d'additionner les masses ainsi obtenues pour chaque type d'unité dans le bloc. On peut négliger dans ces calculs les différences induites par de faibles quantités de co-monomères comme l'acide méthacrylique. Les masses totales théoriques ou visées du bloc B sont exprimées en considérant l'effet d'une hydrolyse partielle (on n'utilise pas pour ce descripteur la fiction d'un taux de d'hydrolyse de 1), si une telle hydrolyse a été effectuée.

Dans la présente demande le <u>taux d'hydrolyse T</u> est défini comme le rapport entre le nombre d'unités dérivant d'acide acrylique ou un sel d'acide acrylique, et le nombre d'unités dérivant de l'acrylate d'alkyle en $C_1$-$C_4$, présentes dans un copolymère avant hydrolyse. Le nombre d'unités dérivant de l'acrylate d'alkyle en $C_1$-$C_4$, est considéré comme étant égal à la quantité en nombre de monomère acrylate d'alkyle utilisé pour la préparation du copolymère avant hydrolyse. Le nombre d'unités dérivant d'acide acrylique ou d'un sel d'acide acrylique peut être déterminé par toute méthode connue, notamment par titrage potentiométrique acido-basique du nombre de groupes -COONa à l'aide d'un acide fort, par exemple à l'aide d'acide chlorhydrique.

Dans la présente demande, on entend par <u>agent de transfert</u>, un agent susceptible d'induire une polymérisation radicalaire contrôlée en présence de monomères insaturés et éventuellement d'une source de radicaux libres.

Copolymère

Le copolymère dibloc est un copolymère linéaire. Le bloc B comprend deux unités différentes. Elles seront généralement réparties de manière statistique dans le bloc B. Le bloc B est alors un bloc statistique.

La masse moléculaire moyenne théorique du copolymère est supérieure ou égale à 20000 g/mol. Elle peut notamment être supérieure ou égale à 25000 g/mol, ou même à 28000 g/mol. Elle peut être inférieure à 50000 g/mol, ou même à 40000 g/mol. Elle est de préférence comprise entre 20000 et 50000 g/mol, et encore plus préférablement comprise entre 25000 g/mol et 50000 g/mol, ou même entre 28000 g/mol et 40000 g/mol.

On mentionne que le bloc A peut comprendre jusqu'à 10% d'unités autres que les unités dérivant du styrène. On mentionne que le bloc B peut comprendre des unités autres que les unités dérivant de l'acide acrylique et les unités dérivant de l'acrylate d'alkyle. De telles unités sont prises en compte dans la composition du bloc B (proportion des différentes unités), le total des unités étant de 100%.

On mentionne que le rapport en poids entre les unités dérivant d'acide acrylique et les unités dérivant de l'acrylate d'alkyle en $C_1$-$C_4$ est de préférence compris entre 34/66 et 95/5, de préférence entre 64/36 et 75/25.

L'acrylate d'alkyle en $C_1$-$C_4$ est de préférence un acrylate d'alkyle hydrolysable en acide acrylique. Les unités dérivant de l'acrylate d'alkyle en $C_1$-$C_4$ sont de préférence dérivées d'un acrylate d'alkyle hydrolysable en acide acrylique. Ainsi, par un procédé préféré, les unités dérivant d'acide acrylique pourront être générées à partir des unités dérivant de l'acrylate d'alkyle, lors d'une hydrolyse partielle.

A titre d'acrylates d'alkyle en $C_1$-$C_4$, on cite notamment l'acrylate d'éthyle, l'acrylate de n-propyle, l'acrylate d'isopropyle, l'acrylate de n-butyle, l'acrylate de tertiobutyle. L'acrylate d'éthyle et l'acrylate de tertiobutyle, sont notamment connus comme pouvant être aisément hydrolysés.

L'acrylate d'alkyle en $C_1$-$C_4$ du copolymère de l'invention est avantageusement l'acrylate d'éthyle (souvent noté EA ou AE ou AEt).

Le bloc A et/ou le bloc B peut comprendre (par apport au poids du bloc A et/ou du bloc B comprenant le monomère hydrophile) jusqu'à 10% en poids (notamment de 0,1 % à 9,99 % en poids), de préférence jusqu'à 5% en poids (notamment de 0,1 % à 4,99 % en poids, par exemple environ 2% ou de 0, 1 % à 1,8%), d'un co-monomère hydrophile additionnel, ionique ou non-ionique.

Parmi les co-monomères hydrophiles additionnels, ioniques ou non ioniques, on peut citer par exemple l'acrylamide, le (méth)acrylate d'hydroxyéthyle, l'acide méthacrylique (AMA) sous forme acide ou salifiée. On préfère plus particulièrement utiliser l'acide méthacrylique ou l'un de ses sels. Le bloc A peut aussi comprendre comme monomère hydrophile additionnel de l'acide acrylique sous forme acide ou salifiée.

De préférence, le copolymère ne comprend pas de fonction boronique, sous forme acide ou salifiée.

La proportion en poids du bloc B par rapport au copolymère peut être supérieure ou égale à 75%, de préférence supérieure ou égale à 85%, de préférence supérieure ou égale à 87%, de préférence supérieure ou égale à 94%, de préférence comprise entre 94 et 97%.

Le copolymère de l'invention peut notamment être présenté de l'une des manières suivantes:

- sous forme solide ou sèche, ou
- sous forme d'un ingrédient concentré fluide comprenant un vecteur, en concentration de préférence supérieure à 10% en poids.

S'il est sous forme d'un ingrédient concentré fluide comprenant un vecteur, en concentration de préférence supérieure à 10% en poids, le vecteur peut notamment comprendre de l'eau et/ou un solvant alcool, l'alcool étant de préférence choisi parmi l'éthanol ou l'isopropanol. L'alcool peut notamment contribuer à fluidifier le copolymère, et à rendre son utilisation industrielle plus facile. Le vecteur pourra être de l'eau ou un mélange de plus de 50% en poids d'eau et de moins de 50% en poids d'alcool. La concentration en copolymère pourra être d'au moins 25% en poids, et de préférence d'au plus 75% en poids.

Si le copolymère est sous forme solide ou sèche il peut notamment être sous forme de poudre, de granulés ou d'extrudé. Le copolymère sous forme solide peut typiquement présenter une teneur en composés liquides, par exemple en eau, inférieure à 10% en poids, de préférence inférieure à 5%, en poids de préférence inférieure à 1 % en poids. Il n'est pas exclu que le copolymère sous forme solide comprenne de petites quantités de composés liquides, par exemple d'eau, comme des teneurs supérieures à 0,05% en poids, par exemple de 0,1 à 1% en poids. Les formes solides peuvent être obtenues par élimination d'un vecteur liquide, notamment d'un milieu liquide, de préférence aqueux, dans lequel le copolymère est préparé. On peut par exemple opérer un séchage.

Procédé

Le copolymère de l'invention peut être préparé par tout procédé approprié, comprenant une phase de polymérisation. Le copolymère selon l'invention peut être obtenu par toute méthode connue, que ce soit par polymérisation radicalaire, contrôlée ou non, par polymérisation par ouverture de cycle (notamment anionique ou cationique), par polymérisation anionique ou cationique, ou encore par modification chimique d'un polymère.

Un procédé avantageux comprend les étapes suivantes:

étape I): on prépare:

- un copolymère dibloc (bloc A)-(bloc B'), ou

- un copolymère tribloc ou étoile d'architecture (coeur)-[(bloc A)-(bloc B')]$_x$ où (coeur)-[(bloc B')-(bloc A)]$_x$ ou x est un nombre moyen supérieur ou égal à 2, où

    - le bloc A comprend les unités dérivant de Styrène, et
    - le bloc B' comprend les unités dérivant d'un acrylate d'alkyle en $C_1$-$C_4$,

    étape I') éventuellement, pour un copolymère tribloc ou étoile, on casse les liaisons (coeur)-(bloc B') ou (coeur)-(bloc A), de manière à obtenir un copolymère dibloc (bloc A)-(bloc B'),

    étape II) on hydrolyse le bloc B' en un bloc B pour obtenir le copolymère dibloc (bloc A)-(bloc B), l'hydrolyse induisant le cas échéant pour un copolymère tribloc ou étoile, une casse des liaisons (coeur)-(bloc B') ou (coeur)-(bloc A), de manière à obtenir un copolymère dibloc (bloc A)-(bloc B).

    étape III), optionnelle: désactivation de groupes de transfert portés par des chaînes macroméculaires et/ou purification du copolymère dibloc (bloc A)-(bloc B) et/ou destruction de sous produits d'hydrolyse et/ou de désactivation.

Le procédé peut en outre, de manière optionnelle comprendre une étape III) pendant et/ou après l'étape II), de désactivation de groupes de transfert portés par des chaînes macroméculaires et/ou de purification du copolymère dibloc (bloc A)-(bloc B) et/ou de destruction de sous produits d'hydrolyse et/ou de désactivation.

Le procédé de polymérisation tel que décrit précédemment, appliqué à la préparation de copolymères ressemblant à ceux de l'invention, est notamment décrit dans le document WO 01/16187.

On mentionne que les terminologies du type (bloc A)-(bloc B') n'excluent toutefois pas la présence de groupes chimiques utiles (groupes de transfert ou résidus) pour la polymérisation, notamment à des extrémités de chaînes ou au centre des chaînes. Ainsi le copolymère dibloc peut présenter en réalité une formule du type R-(bloc A)-(bloc B')-X où X est un groupe de transfert (par exemple X est un groupe de transfert de formule - S-CS-Z ou un résidu d'un tel groupe).

L'étape I) est une étape de polymérisation. L'étape I') est optionnelle et pourra éventuellement être appliquée si le copolymère préparé à l'étape I) est un copolymère tribloc ou étoile. Toutefois, si le copolymère préparé à l'étape I) est un copolymère tribloc ou étoile, il est possible de casser les liaisons lors d'une étape d'hydrolyse. Si la cassure peut être effectuée lors de l'étape d'hydrolyse, alors l'étape I') ne sera pas de grande utilité, et elle sera de préférence supprimée.

Selon un mode avantageux, l'étape I) est mise en oeuvre par polymérisation en émulsion dans l'eau.

On pourra notamment opérer comme suit:

- lors de l'étape I, on prépare copolymère dibloc (bloc A)-(bloc B') par un procédé comprenant les étapes intermédiaires Ia) et Ib) suivantes:

    Ia) on prépare un premier bloc A, par mise en présence de:

    - $n_T$ moles d'un agent de transfert comprenant un unique groupe de transfert
    - $n_A$ moles de styrène ou d'un mélange de monomères comprenant au moins 90% en poids de styrène et où $n_A/n_T > 5$ et de préférence < 5000 ;
    - et éventuellement un initiateur de radicaux libres

    Ib) on prépare un deuxième bloc B' pour obtenir un copolymère dibloc (bloc A)-(bloc B'), par mise en présence de:

    - le bloc A obtenu à l'étape précédente,
    - $n_B$ moles d'un acrylate d'alkyle en $C_1$-$C_4$ hydrolysable ou d'un mélange de monomères comprenant au moins 90% en poids de l'acrylate d'alkyle en $C_1$-$C_4$ hydrolysable de telle sorte que $n_B/n_T > 5$ et de préférence < 5000;
    - et éventuellement un initiateur de radicaux libres;

        - lors de l'étape II), subséquente à l'étape I), on effectue une hydrolyse du bloc B' à un taux T en moles compris entre 0,4 et 0,96 pour obtenir ledit copolymère dibloc (bloc A)-(bloc B), et
        - $20000 \leq n_A/n_T \, M_A + M_{AA} \, n_B/n_T$
        - $[T \, M_{AA} \, n_B + (1\text{-}T) \, M_B \, n_B] \, / \, [M_A n_A + T \, M_{AA} \, n_B + (1\text{-}T) \, M_B \, n_B] \geq 50\%$ où $M_A$ est la masse molaire du styrène ou du mélange de monomères comprenant le styrène mis en oeuvre à l'étape Ia), et $M_B$ est la masse molaire de l'acrylate d'alkyle en $C_1$-$C_4$ ou du mélange de monomères comprenant l'acrylate d'alkyle en $C_1$-$C_4$ mis en oeuvre à l'étape Ib).

Selon un mode avantageux, les étapes Ia) et Ib) de l'étape I) sont mises en oeuvre par polymérisation en émulsion dans l'eau.

Le taux d'hydrolyse T peut avantageusement être compris entre 0,7 et 0,8; de préférence T est égal à 0,75.

Des agents de transfert utiles pour la mise en ouvre du procédé (lors de l'étape I)) sont connus de l'homme du métier et incluent notamment des composés comprenant un groupe de transfert -S-CS-, pour la mise en oeuvre de procédés de polymérisation connus sous les termes de RAFT et/ou MADIX. De tels procédés et agents sont détaillés plus loin.

Lors de l'étape I) décrite ci-dessus, on peut opérer la préparation d'un premier bloc à partir de monomères ou d'un mélange de monomères, d'initiateurs et/ou d'agents favorisant le contrôle de la polymérisation (agents de transferts à groupes -S-CS-, nitroxydes etc...), puis la croissance d'un deuxième bloc sur le premier bloc pour obtenir un copolymère dibloc avec des monomères différents de ceux utilisés pour la préparation du bloc précédent, et éventuellement avec ajout d'initiateurs et/ou d'agents favorisant le contrôle de la polymérisation. Ces procédés de préparation de copolymères à blocs sont connus de l'homme du métier. On mentionne que le copolymère peut présenter en bout de chaîne ou au centre des chaînes un groupe de transfert ou un résidu d'un groupe de transfert, par exemple un groupe comprenant un groupe -S-CS- (par exemple issu d'un Xanthate, d'un dithioester, d'un dithiocarbamate ou d'un trithiocarbonate) ou un résidu d'un tel groupe.

Lors de l'étape II) on hydrolyse partiellement les unités dérivant des monomères hydrolysables du bloc B', pour former un bloc B comprenant des unités dérivant d'acide acrylique sous forme acide ou salifiée (unités hydrolysées), et des unités dérivant du monomère acrylate d'alkyle (unités non hydrolysées). Ces deux types d'unités sont répartis statistiquement dans le bloc B; on peut donc considérer que le bloc B est un bloc sous forme d'un copolymère statistique comprenant des unités dérivant de l'acrylate d'alkyle et des unités dérivant d'acide acrylique sous forme acide ou salifiée. Naturellement le bloc B peut comprendre d'autres unités, souvent en quantités minimes, si un mélange de monomères est utilisé lors de la mise en oeuvre de l'étape Ib).

Le bloc A comprend des unités dérivant de styrène. Le bloc A peut être obtenu à partir d'un mélange de monomères comprenant au moins 90% en poids, de préférence au moins 95%, de styrène ("St") et d'un comonomère ou plusieurs comonomères hydrophile(s). Le bloc A peut ainsi être un copolymère statistique comprenant au moins 90% (notamment de 90 % à 99,9 % en poids), de préférence au moins 95% en poids (notamment de 95 % à 99,9 % en poids) d'unités dérivant de styrène, et jusqu'à 10% en poids (notamment de 0,1 % à 9,99 ou 10 % en poids), de préférence jusqu'à 5% en poids (notamment de 0,1 % à 4,99 ou 5 % en poids, par exemple environ 2% ou de 0,1 à 1,8% en poids) d'autres unités, dérivant de co-monomère(s) hydrophile(s).

Le bloc B' comprend des unités dérivant d'un acrylate d'alkyle en $C_1$-$C_4$ hydrolysable. Le bloc B' peut être obtenu à partir d'un mélange de monomères comprenant au moins 90% (notamment de 90 % à 99,9 %); de préférence au moins 95% (notamment de 95 % à 99,9 %), en poids d'un acrylate d'alkyle en $C_1$-$C_4$ et d'un ou plusieurs comonomère (s) hydrophile(s). Le bloc B' peut ainsi être un copolymère statistique comprenant au moins 90% (notamment de 90 % à 99,9 %), de préférence au moins 95% (notamment de 95 % à 99,9 %), en poids d'unités dérivant de l'alkyle en $C_1$-$C_4$ et jusqu'à 10% (notamment de 0,1 % à 9,99 ou 10 %), de préférence jusqu'à 5% (notamment de 0,1 % à 4,99 ou 5 %, par exemple environ 2% ou de 0,1 à 1,8% en poids), en poids d'autres unités, dérivant de co-monomère(s) hydrophiles.

Le bloc B obtenu à partir du bloc B' après hydrolyse, comprend des unités dérivant de l'acrylate d'alkyle en $C_1$-$C_4$ hydrolysable, des unités dérivant d'acide acrylique sous forme acide ou salifiée, et éventuellement des unités dérivant d'un comonomère hydrophile mis en oeuvre lors de l'étape Ib) de croissance du bloc B', par exemple des unités dérivant d'acide méthacrylique. L'acide acrylique est généralement présent dans le bloc B sous forme d'un sel. Cette forme résulte généralement des conditions de mise en oeuvre de l'hydrolyse et des réactifs utilisés. Il s'agit généralement d'un sel de métal alcalin comme le sodium ou le potassium. Par conséquent le bloc B comprend généralement des unités dérivant d'acide acrylique sous forme d'acrylate de sodium ou de potassium.

Parmi les co-monomères hydrophile(s) pouvant être utiles pour la préparation du bloc A et/ou du bloc B', on cite les co-monomères hydrophile(s) susceptibles de stabiliser une émulsion de monomères et/ou de stabiliser le polymère obtenu par polymérisation en émulsion. On peut citer notamment les co-monomères hydrophiles ioniques ou non ioniques comme l'acrylamide, le (méth)acrylate d'hydroxyéthyle, l'acide méthacrylique (AMA) et leurs sels. On préfère utiliser l'acide méthacrylique ou ses sels. L'acide méthacrylique n'est pas sensible à l'hydrolyse. Il peut toutefois être salifié lors de l'hydrolyse. Pour la préparation du bloc A, on peut aussi utiliser comme co-monomère hydrophile de l'acide acrylique sous forme acide ou salifiée.

Selon un mode particulier de réalisation, le bloc A et/ou le bloc B' ou B comprend (par rapport au bloc A et/ou B et/ou B' comprenant ledit monomère hydrophile) de 0,1 à 10%, de préférence de 0,1 à 5% en poids, par exemple environ 2% ou de 0,1 à 1,8%, de co-monomère hydrophile en particulier l'acide méthacrylique sous forme acide ou salifiée.

Ainsi, lors de l'étape Ia), ou peut utiliser un mélange de monomères comprenant au moins 90%, de préférence au moins 95%, en poids de styrène, et jusqu'à 10%, de préférence jusqu'à 5%, par exemple environ 2% ou de 0,1 à 1,8%, en poids d'acide méthacrylique, sous forme acide ou salifiée.

Lors de l'étape Ib), ou peut utiliser un mélange de monomères comprenant au moins 90%, de préférence au moins 95%, en poids d'acrylate d'alkyle en $C_1$-$C_4$ tel que l'acrylate d'éthyle, et jusqu'à 10%, de préférence jusqu'à 5%, par exemple environ 2% ou de 0,1 à 1,8%, en poids d'acide méthacrylique sous forme acide ou salifiée.

On détaille ci-dessous quelques caractéristiques du procédé de préparation des copolymères de l'invention.

Etape I)

De manière préférée, pour l'étape I) de polymérisation on met en oeuvre des méthodes de polymérisation radicalaire dite vivante ou contrôlée, et de manière particulièrement préférée des méthodes de polymérisation radicalaire contrôlée ou vivante mettant en oeuvre un agent de transfert comprenant un groupe de transfert de formule -S-CS-, notamment connues sous les dénominations de RAFT ou MADIX.

A titre d'exemples de procédés de polymérisation dite vivante ou contrôlée, on peut notamment se référer :

- aux procédés des demandes WO 98/58974, WO 00/75207 et WO 01/42312 qui mettent en oeuvre une polymérisation radicalaire contrôlée par des agents de contrôle de type xanthates,
- au procédé de polymérisation radicalaire contrôlée par des agents de contrôles de type dithioesters ou trithiocarbonates de la demande WO 98/01478,
- au procédé de polymérisation radicalaire contrôlée par des agents de contrôle de type dithiocarbamates de la demande WO 99/31144,
  le procédé de polymérisation radicalaire contrôlée par des agents de contrôle de type dithiocarbazates de la demande WO 02/26836,
- au procédé de polymérisation radicalaire contrôlée par des agents de contrôle de type dithiophosphoroesters de la demande WO 02/10223,
- au procédé de la demande WO 99/03894 qui met en oeuvre une polymérisation en présence de précurseurs nitroxydes, ou les procédés mettant en ouvre d'autres nitroxydes ou complexes nitroxydes / alkoxyamines
- au procédé de la demande WO 96/30421 qui utilise une polymérisation radicalaire par transfert d'atome (ATRP),
- au procédé de polymérisation radicalaire contrôlée par des agents de contrôle de type iniferters selon l'enseignement de Otu et al., Makromol. Chem. Rapid. Commun., 3, 127 (1982),
- au procédé de polymérisation radicalaire contrôlée par transfert dégénératif d'iode selon l'enseignement de Tatemoto et al., Jap. 50, 127, 991 (1975), Daikin Kogyo Co ltd Japan et Matyjaszewski et al., Macromolecules, 28, 2093 (1995),
- au procédé de polymérisation radicalaire contrôlée par les dérivés du tetraphényléthane, divulgué par D. Braun et al. Dans Macromol. Symp. 111,63 (1996), ou encore,
- au procédé de polymérisation radicalaire contrôlée par des complexes organocobalt décrit par Wayland et al. Dans J.Am.Chem.Soc. 116,7973 (1994)
- au procédé de polymérisation radicalaire contrôlée par du diphénylethylène (WO 00/39169 ou WO 00/37507).

Les polymérisations peuvent être effectuées en émulsion dans l'eau (procédé dit "latex"). Ces procédés peuvent mettre en oeuvre des agents émulsifiants, le plus souvent des tensioactifs. Sans vouloir être lié à une quelconque théorie on pense que les procédés de préparation en émulsion mènent à la formation de nodules de blocs A, pouvant influencer les propriétés physico-chimiques du copolymère.

Les polymérisations peuvent être mises en oeuvre en présence d'initiateurs de radicaux libres, connus de l'homme du métier. On peut par exemple utiliser du persulfate de sodium. On peut typiquement mettre en oeuvre des quantités d'initiateurs de 5 à 50% en nombre par rapport à la quantité d'agent de transfert.

On mentionne qu'on ne sortirait pas du cadre de l'invention en mettant en oeuvre et en adaptant des procédés de préparation conduisant à des copolymères tribloc ou étoiles, modifiés par la suite (lors d'une étape I') ou lors de l'étape II) de manière à obtenir des copolymères dibloc. Notamment il est envisageable de mettre en oeuvre des agents de transfert comprenant plusieurs groupes de transferts (par exemple des trithiocarbonates Z-S-CS-S-Z) conduisant à des copolymères téléchéliques de type $R\text{-}[(bloc\ B')\text{-}(bloc\ A)]_w$ comme des tribloc ou étoiles de type $(coeur)\text{-}[(bloc\ A)\text{-}(bloc\ B')]_x$ (par exemple (bloc A)-(bloc B')-R-(bloc B')-(bloc A) comme des tribloc (bloc A)-(bloc B')-(coeur)-(bloc B')-(bloc A)), puis de casser (sectionner, "cliver") les copolymères téléchéliques, pour obtenir des copolymères dibloc (bloc A)-(bloc B'). La section peut intervenir lors de l'hydrolyse, auquel cas on obtient directement des copolymères dibloc (bloc A)-(bloc B). Dans de tels cas, l'homme du métier adaptera les conditions de mise en oeuvre pour viser des masses moléculaires moyennes équivalentes à celles indiquées, par exemple en multipliant les quantités de monomères introduites par le nombre de groupes de transfert compris dans l'agent de transfert. On précise que lors de l'étape I) on ne prépare typiquement pas un copolymère tribloc par une succession de 3 phases polymérisation où au moins un des blocs ne pourrait pas être séparé des autres par une casse lors d'une hydrolyse. Ainsi, le copolymère préparé lors de l'étape I), n'est typiquement pas obtenu par un procédé de polymérisation comprenant une étape de polymérisation de styrène ou d'un mélange de monomères à base de styrène, puis une étape de polyérisation d'acrylate d'éthyle ou d'un mélange de monomères à base d'acrylate d'éthyle, puis une étape de polyérisation de styrène ou d'un mélange de monomères à base de styrène, les polymérisations étant effectuées à l'aide d'un agent de transfert monofonctionnel portant un groupe de formule -S-CS-.

Etape II)

Lors de l'étape II) les quantités respectives des différentes unités dans le bloc B sont contrôlées par le taux d'hydrolyse. La composition du bloc A peut demeurer inchangée lors de l'hydrolyse, si le bloc A ne comprend pas d'unités hydrolysable. Il n'est toutefois pas exclu que le bloc A soit légèrement modifié lors de l'étape d'hydrolyse.

De manière préférentielle, l'étape II) d'hydrolyse est réalisée par ajout d'une base forte comme de la soude ou la potasse. Typiquement on ajoute une proportion en nombre de base par rapport à la quantité de monomère hydrolysable utilisée lors de l'étape Ib), correspondant environ au taux d'hydrolyse visé, avec éventuellement un excès de quelques %. Par exemple on introduit une quantité de soude de 75% en nombre de la quantité d'acrylate d'éthyle hydrolysable mise en oeuvre lors de l'étape Ib). On opère de préférence par hydrolyse homogène en ajoutant progressivement la soude sur le copolymère.

L'étape d'hydrolyse peut notamment entraîner la désactivation et/ou la section de certains groupes de transfert ou d'autres groupes attachés aux chaînes macromoléculaires. L'étape II) peut ainsi générer des sous-produits qu'il est souhaitable d'éliminer, ou générer des groupes sur les chaînes macromoléculaires qu'il est souhaitable de modifier chimiquement. De telles opérations peuvent être mises en oeuvre lors d'une étape III).

Etape III)

L'étape III) est une étape de désactivation de groupes de transfert portés par des chaînes macromoléculaires, et/ou de purification du copolymère dibloc (bloc A)-(bloc B) et/ou de destruction de sous-produits d'hydrolyse et/ou de désactivation.

Lors de l'étape III) optionnelle, les copolymères à blocs obtenus ou les sous-produits d'hydrolyse peuvent subir une réaction de purification ou de destruction de certaines espèces, par exemple par des procédés de type hydrolyse, oxydation, réduction, pyrolyse, ozonolyse ou substitution. Une étape d'oxydation avec de l'eau oxygénée est particulièrement appropriée pour traiter des espèces soufrées. On mentionne que certaines de ces réactions ou opérations peuvent avoir lieu en tout ou partie lors de l'étape II). Dans ce cas, pour ces réactions ou opérations, les deux étapes sont simultanées.

Comme indiqué plus haut, les masses moléculaires moyennes du copolymère dibloc (bloc A)-(bloc B') avant hydrolyse ou de chacun des blocs, sont typiquement fonction des quantités relatives des monomères et d'agent de transfert mis en oeuvre lors de l'étape a). Bien entendu les masses moléculaires moyennes du copolymère dibloc (bloc A)-(bloc B) après hydrolyse ou de chacun des blocs, sont fonction des ces mêmes quantités relatives et aussi du taux d'hydrolyse, par exemple fonction de la quantité de réactif introduit, généralement une base, pour cette hydrolyse.

Pour le procédé dont les étapes Ia) et Ib) ont été détaillées ci-dessus <u>la masse totale théorique du bloc A</u> peut être exprimée par:

$$M_A n_A \,.$$

Pour le procédé dont les étapes Ia) et Ib) ont été détaillées ci-dessus la <u>masse moléculaire moyenne théorique ou visée du bloc A</u> peut être exprimée par:

$$M_A n_A / n_T \,.$$

Pour le procédé dont les étapes Ia) et Ib) ont été détaillées ci-dessus <u>la masse totale théorique du bloc B'</u> peut être exprimée par:

$$M_B n_B \,.$$

Pour le procédé dont les étapes Ia) et Ib) ont été détaillées ci-dessus la <u>masse moléculaire moyenne théorique ou visée du bloc B'</u> peut être exprimée par:

$$M_B n_B / n_T \,.$$

Pour le procédé dont les étapes Ia) et Ib) ont été détaillées ci-dessus <u>la masse totale théorique du bloc B</u> peut

être exprimée par:

$$T \, M_{AA} \, n_B + (1-T) \, M_B \, n_B.$$

Pour le procédé dont les étapes Ia) et Ib) ont été détaillées ci-dessus la <u>masse moléculaire moyenne théorique ou visée du bloc B</u> peut être exprimée par:

$$M_{AA} \, n_B/n_T \, .$$

(car T=1selon la définition de la masse moléculaire moyenne théorique ou visée)

Pour le procédé dont les étapes Ia) et Ib) ont été détaillées ci-dessus <u>la masse totale théorique</u> du copolymère peut être exprimée par:

$$M_A n_A + T \, M_{AA} \, n_B + (1-T) \, M_B \, n_B;.$$

Pour le procédé dont les étapes Ia) et Ib) ont été détaillées ci-dessus la <u>masse moléculaire moyenne théorique du copolymère</u> peut être exprimée par:

$$n_A/n_T \, M_A + M_{AA} \, n_B/n_T.$$

Dans les expressions ci-dessus:

- $M_A$ est le masse molaire du styrène ou du mélange de monomères comprenant le styrène mis en oeuvre à l'étape Ia),
- $M_{AA}$ est la masse molaire de l'acide acrylique,
- $M_B$ est la masse molaire de l'acrylate d'alkyle en $C_1$-$C_4$ ou du mélange de monomères comprenant l'acrylate d'alkyle en $C_1$-$C_4$ mis en oeuvre à l'étape Ib).

A titre de repères on donne les correspondances suivantes:

- $n_A/n_T$ = 5 correspond à une masse moléculaire moyenne théorique du bloc A d'environ 500 g/mol
- $n_A/n_T$ = 5000 correspond à une masse moléculaire moyenne théorique du bloc A d'environ 500000 g/mol,
- $n_B/n_T$ = 5 correspond à une masse moléculaire moyenne théorique du bloc B' d'environ 500 g/mol
- $n_B/n_T$ = 5000 correspond à une masse moléculaire moyenne théorique du bloc B' d'environ 500000 g/mol.
- $n_A/n_T \, M_A + M_{AA} \, n_B/n_T$ = 13000 g/mol (resp. 2000, resp. 8000, resp. 20000, resp. 50000) correspond à une masse moléculaire moyenne théorique du dibloc (bloc A)-(bloc B) d'environ 13000 g/mol (resp. 2000, resp. 8000, resp. 20000, resp. 50000), en considérant une hydrolyse totale, pour le cas ou l'acrylate d'alkyle est l'acrylate d'éthyle.

On note que les rapports en poids entre les blocs sont définis comme les rapports entre les masses totales théoriques ou visées (on n'utilise pas pour ce descripteur la fiction d'un taux de d'hydrolyse de 1). Ainsi:

- $M_A n_A \leq T \, M_{AA} \, n_B + (1-T) \, M_B \, n_B$, indique que le rapport en poids (bloc B)/(bloc A) $\geq$ 1. Ceci est une caractéristique du copolymère mis en oeuvre selon l'invention.
- $M_A n_A / [M_A n_A + T \, M_{AA} \, n_B + (1-T) \, M_B \, n_B]$ indique la quantité en poids de bloc A dans le copolymère dibloc (bloc A)-(bloc B), c'est-à-dire la proportion de bloc A.
- $[T \, M_{AA} \, n_B + (1-T) \, M_B \, n_B] / [M_A n_A + T \, M_{AA} \, n_B + (1-T) \, M_B \, n_B]$ indique la quantité en poids de bloc B dans le copolymère dibloc (bloc A)-(bloc B), c'est-à-dire la proportion de bloc B.

Notamment, on peut avoir:

- $25000 \leq n_A/n_T \, M_A + M_{AA} \, n_B/n_T$, ou même $28000 \leq n_A/n_T \, M_A + M_{AA} \, n_B/n_T$ et/ou
- $n_A/n_T \, M_A + M_{AA} \, n_B/n_T \leq 50000$, ou même $n_A/n_T \, M_A + M_{AA} \, n_B/n_T \leq 40000$, et/ou
- $20000 \leq n_A/n_T \, M_A + M_{AA} \, n_B/n_T \leq 50000$, ou même
  $25000 \leq n_A/n_T \, M_A + M_{AA} \, n_B/n_T \leq 50000$, ou même $28000 \leq n_A/n_T \, M_A + M_{AA} \, n_B/n_T \leq 40000$.

La masse moléculaire moyenne théorique du copolymère est supérieure ou égale à 20000 g/mol. Elle peut notamment être supérieure ou égale à 25000 g/mol, ou même à 28000 g/mol. Elle peut être inférieure à 50000 g/mol, ou même à 40000 g/mol. Elle est de préférence comprise entre 20000 et 50000 g/mol, et encore plus préférablement comprise entre 25000 g/mol et 50000 g/mol, ou même entre 28000 g/mol et 40000 g/mol.

On peut également avoir:

- $[T\ M_{AA}\ n_B + (1\text{-}T)\ M_B\ n_B]\ /\ [M_A n_A + T\ M_{AA}\ n_B + (1\text{-}T)\ M_B\ n_B\ ] \geq 75\%$,
- de préférence $[T\ M_{AA}\ n_B + (1\text{-}T)\ M_B\ n_B]\ /\ [M_A n_A + T\ M_{AA}\ n_B + (1\text{-}T)\ M_B\ n_B\ ] \geq 85\%$,
- de préférence $[T\ M_{AA}\ n_B + (1\text{-}T)\ M_B\ n_B]\ /\ [M_A n_A + T\ M_{AA}\ n_B + (1\text{-}T)\ M_B\ n_B\ ] \geq 87\%$,
- de préférence $[T\ M_{AA}\ n_B + (1\text{-}T)\ M_B\ n_B]\ /\ [M_A n_A + T\ M_{AA}\ n_B + (1\text{-}T)\ M_B\ n_B\ ] \geq 94\%$,
- de préférence $94\% \leq [T\ M_{AA}\ n_B + (1\text{-}T)\ M_B\ n_B]\ /\ [M_A n_A + T\ M_{AA}\ n_B + (1\text{-}T)\ M_B\ n_B\ ] \leq 97\%$.

Avantageusement, la masse moléculaire moyenne mesurée du copolymère dibloc (bloc A)-(bloc B') est supérieure ou égale à 29250 g/mol, de préférence comprise entre 29250 et 100000 g/mol, de préférence comprise entre 29250 et 90000 g/mol.

On note qu'après la préparation du copolymère, on peut mettre une <u>étape IV)</u> optionnelle de mise sous forme solide. Cette étape peut être réalisée selon des techniques classiques d'élimination d'un milieu réactionnel liquide, notamment par évaporation, par exemple par évaporation d'eau. Il peut par exemple s'agir d'une étape de séchage. Le séchage peut par exemple être opéré à température supérieure à 100°C, de préférence supérieure à 150°C, par exemple de 150°C à 200°C. Il peut être opéré en présence de moyens d'agitation ou de cisaillement permettant l'obtention de poudres ou de granulés, comme des tambours, des granulateurs, des drageoirs. On peut notamment utiliser des équipements de séchage adaptés aux produits pouvant présenter des viscosités importantes, comme les équipements mono-vis ou bi-vis disponibles auprès de la société LIST AG.

Applications - Utilisations

Outre ses propriétés hydratantes, le copolymère peut notamment être utilisé dans les compositions suivantes:

- compositions pour les soins ménagers, notamment pour le traitement du linge (lessive, adoucissants), pour la vaisselle (à la main ou en machine), pour le nettoyage ou le traitement des surfaces dures (nettoyage des sols, des cuisines, des salles de bain, sous forme de produits à diluer et/ou à pulvériser, et/ou à appliquer à l'aide de lingettes)
- compositions de revêtements, notamment compositions de peintures,
- compositions utilisées dans le bâtiment et les travaux publiques, notamment des mastics, des joints, des bitumes, des compositions à liant hydraulique comme les ciments ou les plâtres,
- compositions lubrifiantes, notamment pour la mise en forme ou la déformation de métaux,
- compositions utilisées dans le cadre l'exploitation des gisements de pétrole ou de gaz (fluide de forage, de fracturation, de stimulation, de production),
- compositions pour le traitement ou la fabrication de papier,
- compositions phytosanitaires,
- compositions d'encres ou de teintures,
- composition de broyage.

Dans ces compositions et dans d'autres compositions, le copolymère peut être utilisé comme agent émulsifiant ou d'aide à l'émulsification, agent dispersant ou d'aide à la dispersion, de gouttelettes ou de particules utiles dans la composition. S'il est utilisé à titre d'agent dispersant ou d'aide à la dispersion, il est de préférence utilisé à titre d'agent dispersant de composés autres que des latex. Le copolymère peut trouver une utilité dans ces compositions lorsqu'elles sont sous forme d'émulsions et/ou de dispersions. Il peut trouver également trouver une utilité dans ces compositions lorsqu'elles sont destinées à mettre en émulsion des composés ou à mettre en dispersion des composés. Il peut également trouver une utilité dans ces compositions pour moduler la viscosité, et/ou pour moduler le pouvoir de mise en suspension de composés. Il peut notamment trouver une utilité dans ces compositions pour améliorer la dispersion de particules solides, évitant la présence de traces visibles de particules ou la présence d'agglomérats modifiant le toucher lors de leur application sur une surface, et/ou permettant d'améliorer leur stabilité. Il peut notamment trouver une utilité dans ces compositions lorsqu'elles sont sous forme d'émulsions: la phase dispersée peut être mieux dispersée et/ou plus stable. Ceci peut notamment renforcer l'activité de la phase dispersée et/ou moduler ses propriétés sensorielles.

D'autres détails ou avantages de l'invention pourront apparaître au vu des exemples qui suivent, sans caractère limitatif.

**Exemple 1: Copolymère selon l'invention**

**Préparation d'un copolymère dibloc Polystyrène-bloc-Poly(acrylate d'éthyle-stat-sel de sodium d'acide acrylique) de type (2b) par synthèse d'un copolymère dibloc**

**Polystyrène-bloc-poly(acrylate d'éthyle) des Mn visées 2000-bloc-42000 (g/mole)**

**puis hydrolyse à 75% des groupements ester d'acrylate d'éthyle.**

Etape la : Préparation d'un premier bloc de polystyrène de masse moléculaire théorique d'environ 2000 g/mol

On introduit dans le réacteur, à température ambiante, 3000 g d'eau, 17,6 g de dodecyl sulfate de sodium et 0,290 g de carbonate de sodium $Na_2CO_3$. Le mélange obtenu est agité pendant 30 minutes sous azote. La température est ensuite élevée à 75°C, puis on ajoute un mélange 1 comprenant :

- 10,00 g de styrène (St),
- 0,200 g d'acide méthacrylique (AMA), et
- 10,42 g de xanthate $(CH_3)(CO_2CH_3)CH-S(C=S)OCH_2CH_3$.

Le mélange est porté à 85°C, puis on introduit une solution de 1,19 g de persulfate de sodium $Na_2S_2O_8$ solubilisé dans 20,0 g d'eau.
Après 5 minutes, on démarre l'addition d'un mélange 2 comprenant :

- 90,0 g de styrène (St) et
- 1,80 g d'acide méthacrylique (AMA).

On poursuit l'addition pendant 60 minutes. Après addition complète des divers ingrédients, l'émulsion de copolymère obtenue est maintenue à 85°C pendant une heure.
Un échantillon (5g) est alors prélevé et analysé par chromatographie d'exclusion stérique (SEC) dans du THF. Sa masse moléculaire moyenne en nombre mesurée Mn est égale à 2000 g/mol en équivalents polystyrène (calibration par des étalons de polystyrène linéaires). Son indice de polymolécularité Mw/Mn est égal à 2,0.
Une analyse de l'échantillon par chromatographie gazeuse révèle que la conversion des monomères est supérieure à 99%.

Etape Ib: Croissance d'un deuxième bloc de poly(acrylate d'éthyle) de masse moléculaire théorique d'environ 42000 g/mol pour obtenir un copolymère dibloc polystyrène-bloc-poly(acrylate d'éthyle)

On part du copolymère en émulsion obtenu précédemment à l'étape la après en avoir prélevé 5 g pour analyse et sans arrêter le chauffage. On introduit en continu pendant trois heures 1,19 g de persulfate de sodium $Na_2S_2O_8$ dilué dans 50,0 g d'eau.
Simultanément pendant trois heures, on additionne à 85°C un mélange 3 comprenant:

- 200,0g d'eau,
- 2,20 g de carbonate de sodium $Na_2CO_3$, et
- 4,40 g de dodecyl sulfate de sodium

Simultanément on ajoute un mélange 4 comprenant :

- 2100 g de d'acrylate d'éthyle (EA), et
- 42,0 g d'acide méthacrylique (AMA)

Après addition complète des divers ingrédients, l'émulsion de copolymère obtenue est maintenue à 85°C pendant une heure. Puis on introduit 4,40g de tert-butylbenzylperoxide en une seule fois et on démarre l'addition d'un mélange 5 comprenant :

- 2,20 g d'acide érythorbique
- 50,0 g d'eau.

On poursuit l'addition pendant 60 minutes. Après addition complète des divers ingrédients, l'émulsion est refroidie à ~25°C pendant une heure. Un échantillon (5g) est alors prélevé et analysé par chromatographie d'exclusion stérique (SEC) dans du THF. Sa masse moléculaire moyenne en nombre mesurée Mn est égale à 41000 g/mol en équivalents polystyrène (calibration par des étalons de polystyrène linéaires). Son indice de polymolécularité Mw/Mn est égal à 6.

Une analyse de l'échantillon par chromatographie gazeuse révèle que la conversion des monomères est supérieure à 99.8%. Le produit obtenu est une dispersion dans l'eau du copolymère (latex), d'extrait sec d'environ 41%.

Etape II: Hydrolyse partielle (à 75% visée) du bloc poly(acrylate d'éthyle) du copolymère obtenu précédemment à l'étape Ib pour obtenir le dibloc polystyrène-bloc-poly(acrylate d'éthyle -stat- sel de sodium d'acide acrylique) du type (2b)

On introduit dans le réacteur, à température ambiante, 750 g d'eau, 250 g de propanol-2, et 1347 g de copolymère en émulsion (c.f. 550 g de copolymère en sec) obtenu précédemment à l'étape Ib. Le mélange obtenu est agité pendant 15 minutes. La température est ensuite élevée à 75°C, puis on ajoute 678 g de soude (solution dans l'eau à 23,2% massique) en continu sur une heure. Après 30 minutes du début de l'addition de soude, on commence l'addition en continue sur une heure de 12 g d'eau oxygénée (solution à 30%). Après addition complète des divers ingrédients, la solution de copolymère obtenue est maintenue à 75°C pendant quatre heures, puis refroidie à 25°C pendant une heure.

Le produit récupéré en fin de réaction est un gel translucide dans l'eau d'extrait sec d'environ 20%.

Le copolymère ainsi obtenu présente les caractéristiques suivantes:

- Masse moléculaire moyenne théorique du bloc A: 2000 g/mol
- Masse moléculaire moyenne théorique du bloc B: 30000 g/mol
- Proportion en poids du bloc B: 96%
- Proportion en poids du bloc A: 4%
- Quantité en poids d'unités dérivant d'acrylate d'éthyle dans le bloc B: 31%

## Exemple 2: Copolymère comparatif

**Préparation d'un copolymère dibloc Polystyrène-bloc-poly(acrylate d'éthyle-stat-sel de sodium d'acide acrylique) par synthèse d'un copolymère dibloc Polystyrène-bloc-poly(acrylate d'éthyle) des Mn visées 2000-bloc-20000 (g/mole) puis hydrolyse à 75% des groupements ester de l'acrylate d'éthyle.**

Etape Ia : Préparation d'un premier bloc de polystyrène de masse moléculaire théorique d'environ 2000 g/mol

On introduit dans le réacteur, à température ambiante, 2150 g d'eau, 6,00 g de dodécyl sulfate de sodium et 0,650 g de carbonate de sodium $Na_2CO_3$. Le mélange obtenu est agité pendant 30 minutes sous azote. La température est ensuite élevée à 75°C, puis on ajoute un mélange 1 comprenant :

- 18,2 g de styrène (St),
- 0,360 g d'acide méthacrylique (AMA), et
- 18,9 g de xanthate $(CH_3)(CO_2CH_3)CH-S(C=S)OCH_2CH_3$.

Le mélange est porté à 85°C, puis on introduit une solution de 2,16 g de persulfate de sodium $Na_2S_2O_8$ solubilisé dans 20,0 g d'eau.

Après 5 minutes, on démarre l'addition d'un mélange 2 comprenant :

- 163,6 g de styrène (St) et
- 3,30 g d'acide méthacrylique (AMA).

On poursuit l'addition pendant 60 minutes. Après addition complète des divers ingrédients, l'émulsion de copolymère obtenue est maintenue à 85°C pendant une heure.

Un échantillon (~5g) est alors prélevé et analysé par chromatographie d'exclusion stérique (SEC) dans du THF. Sa masse moléculaire moyenne en nombre mesurée Mn est égale à 2000 g/mol en équivalents polystyrène (calibration par des étalons de polystyrène linéaires). Son indice de polymolécularité Mw/Mn est égal à 2,1.

Une analyse de l'échantillon par chromatographie gazeuse révèle que la conversion des monomères est supérieure à 99%.

Etape IIa : croissance d'un deuxième bloc de poly(acrylate d'éthyle) de masse moléculaire théorique d'environ 20000 g/mol pour obtenir un copolymère dibloc polystyrène-bloc-poly(acrylate d'éthyle),

On part du copolymère en émulsion obtenu précédemment à l'étape la après en avoir prélevé 5 g pour analyse et sans arrêté le chauffage.

On introduit en continu pendant trois heures 2,16 g de persulfate de sodium $Na_2S_2O_8$ dilué dans 50,0 g d'eau. Simultanément pendant trois heures, on additionne à 85°C un mélange 3 comprenant:

- 200,0 g d'eau,
- 4,00 g de carbonate de sodium $Na_2CO_3$, et
- 8,00 g de dodecyl sulfate de sodium

Simultanément on ajoute un mélange 4 comprenant :

- 1818 g de d'acrylate d'éthyle (EA), et
- 33,4 g d'acide méthacrylique (AMA)

Après addition complète des divers ingrédients, l'émulsion de copolymère obtenue est maintenue à 85°C pendant une heure.

Puis on introduit 4,00g de tert-butylbenzylperoxide en une seule fois et on démarre l'addition d'un mélange 5 comprenant :

- 2,00 g d'acide érythorbique
- 50,0 g d'eau.

On poursuit l'addition pendant 60 minutes. Après addition complète des divers ingrédients, l'émulsion est refroidie à ~25°C pendant une heure.

Un échantillon (5g) est alors prélevé et analysé par chromatographie d'exclusion stérique (SEC) dans du THF. Sa masse moléculaire moyenne en nombre mesurée Mn est égale à 17500 g/mol en équivalents polystyrène (calibration par des étalons de polystyrène linéaires). Son indice de polymolécularité Mw/Mn est égal à 2,9.

Une analyse de l'échantillon par chromatographie gazeuse révèle que la conversion des monomères est supérieure à 99.8%.

Le produit obtenu est une dispersion dans l'eau du copolymère (latex), d'extrait sec d'environ 44%.

Etape II : Hydrolyse partielle (à 75% visée) du bloc poly(acrylate d'éthyle) du copolymère obtenu précédemment à l'étape 2 pour obtenir le dibloc Polystyrène-bloc-poly(acrylate d'éthyle -stat- sel de sodium d'acide acrylique) de type (2a1).

On introduit dans le réacteur, à température ambiante, 900 g d'eau, 300 g de propanol-2, et 1563 g de copolymère en émulsion (c.f. 700 g de copolymère en sec) obtenu précédemment à l'étape Ib. Le mélange obtenu est agité pendant 15 minutes. La température est ensuite élevée à 75°C, puis on ajoute 822 g de soude (solution dans l'eau à 23,2% massique) en continu sur une heure.

Après 30 minutes du début de l'addition de soude, on commence l'addition en continue sur une heure de 25 g d'eau oxygénée (solution à 30%).

Après addition complète des divers ingrédients, la solution de copolymère obtenue est maintenue à 75°C pendant quatre heures puis refroidie à ~25°C pendant une heure.

Le produit récupéré en fin de réaction est un gel translucide dans l'eau d'extrait sec d'environ 17%.

Le copolymère ainsi obtenu présente les caractéristiques suivantes:

- Masse moléculaire moyenne théorique du bloc A: 2000 g/mol
- Masse moléculaire moyenne théorique du bloc B: 14000 g/mol
- Proportion en poids du bloc B: 90%
- Proportion en poids du bloc A: 10%
- Quantité en poids d'unités dérivant d'acrylate d'éthyle dans le bloc B: 31 %

**Exemple 3 - Evaluations des copolymères - Performance hydratante**

Les performances hydratantes des solutions suivantes sont testées par Microscopie Confocale Laser Raman.

Solution A

| | |
|---|---|
| Eau distillée | 93% |
| Glycérol | 7% |

Solution B

| | |
|---|---|
| Eau distillée | 99% |
| Polymère dibloc de l'exemple 1 selon l'invention | 1% MA |

Solution D

| | |
|---|---|
| Eau distillée | 99% |
| Polymère dibloc de l'exemple 2 comparatif | 1% MA |

Procédure:

Des pastilles de squames plantaires compactés, d'un poids de 80 à 100mg, d'épaisseur de plus de 100$\mu$m et de surface d'environ 1cm$^2$ sont utilisées modèle de Corneum Stratum à hydrater. 5 mesures sont faites sur chaque pastille de squame plantaire et 5 pastilles sont utilisées pour chaque solution de polymère, soit 25 mesures pour chaque solution de polymère.

La quantité de solution de polymère appliquée sur chaque pastille est d'environ 50$\mu$l. Un microscope confocal laser Raman de type LabRam (Jobin Yvon - Horiba) équipé d'un laser He :Ne ($\lambda$=633 nm de puissance d'environ 8.4mW) et d'un détecteur CCD est utilisé pour réaliser les mesures. La faisceau laser est focalisé dans la peau avec un objectif X50 et les spectres Raman sont enregistrés en utilisant un mode point par point, de la surface de l'échantillon, vers la profondeur. Les paramètres d'acquisition des spectres sont : trou (hole) et fente (slit) : 200$\mu$m, temps d'acquisition : 30s sur une fréquence de 2800 à 4000 cm$^{-1}$. Le microscope en question a fait l'objet d'une modification technique indispensable à la mesure de l'eau, avec l'incorporation d'une enceinte permettant de contrôler durant les acquisitions la température et l'humidité : les paramètres sont de 25 °C et 50% Humidité Relative

La quantification de l'eau est déterminée par le ratio des bandes OH de l'eau / bandes CH$_3$ des protéines, en spectrographie Raman, tel que décrit dans :

1 Chrit L, Hadjur C, Morel S, Sockalingum G.D., Lebourdon G, Leroy F, Manfait M: In vivo chemical investigation of Human skin using a confocal Raman Optic microprobe. J. Biomed Opt 2005.
2 Caspers PJ, Lucassen GW, Carter EA, Bruining HA, Puppels GJ: In vivo confocal Raman microspectroscopy of the skin: non invasive determination of molecular concentration profiles. Journal of Investigative Dermatology 2001; 116(3): 434-442.

Les ratios eau/protéines dans le Stratum Corneum ont été déterminés en spectrographie Raman, en calculant le ratio entre l'intensité des bandes OH de l'eau (aire sous la courbe) intégrées entre 3350cm$^{-1}$ et 3550 cm$^{-1}$ et l'intensité des bandes CH$_3$ des protéines (aire sous la courbe) intégrées entre 2910cm$^{-1}$ et 2965 cm$^{-1}$.

La quantification de l'eau est calculée à partir des équations suivantes :

$$W/P = (m_w/m_p)R$$

Teneur en eau (%) : $m_w/(m_w+m_p)=100\%$ (W/P)/(W/(P+R))
$m_w$ et $m_p$ étant respectivement les masses d'eau et de protéines dans le volume de l'échantillon testé;
W étant l'intensité du signal Raman de l'eau intégré (bandes OH de l'eau (aire sous la courbe) intégrées) ;
P étant l'intensité du signal Raman des protéines intégré (bandes CH$_3$ des protéines (aire sous la courbe) intégrées) ;
R est une constante de proportionnalité exprimant le ratio entre les signaux Raman de l'eau et des protéines dans une solution à 50%.
La teneur en eau s'exprime en gramme d'eau pour 100 g de tissus humide.
Ces fonctionnalités sont intégrées dans le logiciel LabSpec de Jobin-Yvon Horiba.
Pour évaluer la performance hydratante, les mesures sont faites à T=0, avant le traitement et à T+1 heure après le traitement, de la surface à 20µm de profondeur.

Résultats

| Solution | Performance hydratante MCL Raman |
|----------|----------------------------------|
| A | 1 |
| B | 117 |
| D | 1,92 |

Significativement, le copolymère dibloc selon l'invention en solution dans l'eau à 1%, a une performance hydratante, mesurée en microscopie confocale laser Raman, très supérieure à celle du glycérol à 7% dans l'eau et à celle du copolymère comparatif.

**Revendications**

1. Copolymère dibloc (bloc A)-(bloc B) dans lequel:

   - le bloc A comprend au moins 90% en poids d'unités dérivant de styrène,
   - le bloc B est un bloc statistique comprenant

      (a) de 34 à 95% en poids, de préférence de 64 à 75%, d'unités dérivant d'acide acrylique sous forme acide ou salifiée, et
      (b) de 5 à 66% en poids, de préférence de 25 à 36%, d'unités dérivant d'un acrylate d'alkyle en $C_1$-$C_4$

   - la proportion pondérale du bloc B par rapport au copolymère est supérieure ou égale à 50%,
   - la masse moléculaire moyenne théorique du copolymère est supérieure ou égale à 20000 g/mol, et de préférence comprise entre 20000 et 50000 g/mol.

2. Copolymère selon la revendication 1, **caractérisé en ce que** ledit copolymère dibloc est linéaire, et le bloc B est un bloc statistique.

3. Copolymère selon l'une quelconque des revendications 1 ou 2, **caractérisé en ce que** l'acrylate d'alkyle en $C_1$-$C_4$ est l'acrylate d'éthyle.

4. Copolymère selon l'une quelconque des revendications 1 à 3, **caractérisé par le fait que** le bloc A et/ou le bloc B comprend jusqu'à 10% en poids, de préférence jusqu'à moins de 5% en poids, d'un co-monomère hydrophile additionnel, ionique ou non-ionique.

5. Copolymère selon la revendication 4, où le co-monomère hydrophile est l'acide méthacrylique sous forme acide ou salifiée.

6. Copolymère selon l'une des revendications précédentes, **caractérisé en ce que** la proportion en poids du bloc B par rapport au copolymère est supérieure ou égaie à 75%, de préférence supérieure ou égale à 94%, de préférence comprise entre 94 et 97%.

7. Copolymère selon l'une des revendications précédentes, **caractérisé en ce qu'**il est:

   - sous forme solide ou sèche, ou
   - sous forme d'un ingrédient concentré fluide comprenant un vecteur, en concentration supérieure à 10% en poids.

8. Copolymère selon l'une des revendications précédentes, **caractérisé en ce que**:

- il est sous forme d'un ingrédient concentré fluide comprenant un vecteur, en concentration supérieure à 10% en poids, et
- le vecteur comprend de l'eau et/ou un solvant alcool, l'alcool étant de préférence choisi parmi l'éthanol ou l'isopropanol.

**9.** Copolymère selon la revendication 8, **caractérisé en ce que**

- le vecteur est de l'eau ou un mélange de plus de 50% en poids d'eau et de moins de 50% en poids d'alcool,
- la concentration est d'au moins 25% en poids, et de préférence d'au plus 75% en poids.

**10.** Procédé de préparation d'un copolymère selon l'une des revendications 1 à 9, comprenant les étapes suivantes:

<u>étape I)</u>: on prépare:

- un copolymère dibloc (bloc A)-(bloc B'), ou
- un copolymère tribloc ou étoile d'architecture (coeur)-[(bloc A)-(bloc B')]$_x$ où (coeur)-[(bloc B')-(bloc A)]$_x$ ou x est un nombre moyen supérieur ou égal à 2, où

- le bloc A comprend les unités dérivant de Styrène, et
- le bloc B' comprend les unités dérivant d'un acrylate d'alkyle en $C_1$-$C_4$,

<u>étape I'</u>) éventuellement, pour un copolymère tribloc ou étoile, on casse les liaisons (coeur)-(bloc B') ou (coeur)-(b [ocA), de manière à obtenir un copolymère dibloc (bloc A)-(bloc B'),
<u>étape II</u>) on hydrolyse le bloc B' en un bloc B pour obtenir le copolymère dibloc (bloc A)-(bloc B), l'hydrolyse induisant le cas échéant pour un copolymère tribloc ou étoile, une casse des liaisons (coeur)-(bloc B') ou (coeur)-(bloc A), de manière à obtenir un copolymère dibloc (bloc A)-(bloc B).

**11.** Procédé selon la revendication 10, **caractérisé en ce que** l'étape I) est mise en oeuvre par polymérisation en émulsion dans l'eau.

**12.** Procédé selon l'une quelconque des revendications 10 à 11, **caractérisé en ce que**:

- lors de l'<u>étape I</u>, on prépare copolymère dibloc (bloc A)-(bloc B') par un procédé comprenant les étapes intermédiaires Ia) et Ib) suivantes:

<u>Ia</u>) on prépare un premier bloc A, par mise en présence de:

- $n_T$ moles d'un agent de transfert comprenant un unique groupe de transfert
- $n_A$ moles de styrène ou d'un mélange de monomères comprenant au moins 90% en poids de styrène et où $n_A/n_T > 5$ et de préférence < 5000 ;
- et éventuellement un initiateur de radicaux libres

<u>Ib</u>) on prépare un deuxième bloc B' pour obtenir un copolymère dibloc (bloc A)-(bloc B'), par mise en présence de:

- le bloc A obtenu à l'étape précédente,
- $n_B$ moles d'un acrylate d'alkyle en $C_1$-$C_4$ hydrolysable ou d'un mélange de monomères comprenant au moins 90% en poids d'un acrylate d'alkyle en $C_1$-$C_4$ hydrolysable de telle sorte que $n_B/n_T > 5$ et de préférence < 5000;
- et éventuellement un initiateur de radicaux libres,
- <u>lors de l'étape II</u>), subséquente à l'étape 1), on effectue une hydrolyse du bloc B' à un taux T en moles compris entre 0,4 et 0,96 pour obtenir ledit copolymère dibloc (bloc A)-(bloc B), et
- $20000 \leq n_A/n_T \, M_A + M_{AA} \, n_B/n_T$
- [T $M_{AA} \, n_B$ + (1-T) $M_B \, n_B$] / [$M_A n_A$ + T $M_{AA} \, n_B$ + (1-T) $M_B \, n_B$ ] $\geq$ 50% où $M_A$ est la masse molaire du styrène ou du mélange de monomères comprenant le styrène mis en oeuvre à l'étape Ia), et $M_8$ est la masse molaire de l'acrylate d'alkyle en $C_1$-$C_4$ ou du mélange de monomères comprenant l'acrylate d'alkyle en $C_1$-$C_4$ mis en oeuvre à l'étape Ib).

**13.** Procédé selon l'une des revendications précédentes, **caractérisé en ce que** T est compris entre 0,7 et 0,8, de préférence T est égal à 0,75.

**14.** Procédé selon l'une des revendications 10 à 13, **caractérisé en ce que**:

- $20000 \leq n_A/n_T \, M_A + M_{AA} \, n_B \ln_T \leq 50000$.

**15.** Procédé selon l'une des revendications 10 à 14, **caractérisé en ce que**:

- $[T \, M_{AA} \, n_B + (1\text{-}T) \, M_B \, n_B] / [M_A n_A + T \, M_{AA} \, n_B + (1\text{-}T) \, M_B \, n_B] \geq 75\%$,
- de préférence $[T \, M_{AA} \, n_B + (1\text{-}T) \, M_B \, n_B] / [M_A n_A + T \, M_{AA} \, n_B + (1\text{-}T) \, M_B \, n_B] \geq 94\%$,
- de préférence $94\% \leq [T \, M_{AA} \, n_B + (1\text{-}T) \, M_B \, n_B] / [M_A n_A + T \, M_{AA} \, n_B + (1\text{-}T) \, M_B \, n_a] \leq 97\%$.

**16.** Procédé selon l'une des revendications 10 à 15, **caractérisé en ce que** la masse moléculaire moyenne mesurée du copolymère dibloc (bloc A)-(bloc B') est supérieure ou égale à 29250 g/mol, de préférence comprise entre 29250 et 100000 g/mol.

**17.** Procédé selon l'une des revendication 10 à 16, **caractérisé en ce que** on effectue une étape III), pendant et/ou après l'étape II), de désactivation de groupes de transfert portés par des chaînes macroméculaires et/ou de purification du copolymère dibloc (bloc A)-(btoc B) et/ou de destruction de sous produits d'hydrolyse et/ou de désactivation.

**18.** Procédé selon l'une quelconque des revendications 10 à 17, **caractérisé en ce que** l'étape I) est réalisée par polymérisation radicalaire contrôlée avec un agent de transfert comprenant un groupe de transfert de formule -S-CS-.

**19.** Procédé selon l'une des revendications 10 à 18, **caractérisé par le fait que** dans l'étape Ia) on met en oeuvre un mélange de monomères comprenant au moins 90 % en poids de styrène et jusqu'à 10% en poids d'un co-monomère ionique ou non-ionique hydrophile, de préférence au moins 95% en poids de styrène et jusqu'à de 5% en poids d'acide méthacrylique.

**20.** Procédé selon l'une des revendications 10 à 19, **caractérisé par le fait que** dans l'étape Ib) on met en oeuvre un mélange de monomères comprenant au moins 90 % en poids de l'acrylate d'alkyle en $C_1$-$C_4$ et jusqu'à 10% en poids d'un co-monomère ionique ou non-ionique hydrophile, de préférence au moins 95% en poids de l'acrylate d'alkyle en $C_1$-$C_4$ et jusqu'à 5% en poids d'acide méthacrylique.

**21.** Procédé selon la revendication 19 ou 20, où le co-monomère hydrophile est l'acide méthacrylique sous forme acide ou salifiée.

**22.** Procédé selon l'une des revendications 10 à 21, **caractérisé en ce que** l'acrylate d'alkyle en $C_1$-$C_4$ est l'acrylate d'éthyle.

**Claims**

**1.** (Block A)-(block B) diblock copolymer in which:

- the block A comprises at least 90% by weight of units deriving from styrene,
- the block B is a random block comprising:

    (a) from 34 to 95% by weight, preferably from 64 to 75% by weight, of units deriving from acrylic acid in the acid or salified form, and
    (b) from 5 to 66% by weight, preferably from 25 to 36% by weight, of units deriving from a $C_1$-$C_4$ alkyl acrylate,

- the proportion by weight of the block B with respect to the copolymer is greater than or equal to 50%,
- the theoretical average molecular weight of the copolymer is greater than or equal to 20 000 g/mol and preferably between 20 000 and 50 000 g/mol.

**2.** Copolymer according to Claim 1, **characterized in that** said diblock copolymer is linear and the block B is a random block.

**3.** Copolymer according to either one of Claims 1 and 2, **characterized in that** the $C_1$-$C_4$ alkyl acrylate is ethyl acrylate.

**4.** Copolymer according to any one of Claims 1 to 3, **characterized in that** the block A and/or the block B comprises up to 10% by weight, preferably up to less than 5% by weight, of an additional ionic or nonionic hydrophilic comonomer.

**5.** Copolymer according to Claim 4, where the hydrophilic comonomer is methacrylic acid in the acid or salified form.

**6.** Copolymer according to one of the preceding claims, **characterized in that** the proportion by weight of the block B, with respect to the copolymer, is greater than or equal to 75%, preferably greater than or equal to 94% and preferably between 94 and 97%.

**7.** Copolymer according to one of the preceding claims, **characterized in that** it is:

- in a solid or dry form, or
- in the form of a fluid concentrated ingredient comprising a carrier, in a concentration of greater than 10% by weight.

**8.** Copolymer according to one of the preceding claims, **characterized in that in that**:

- it is in the form of a fluid concentrated ingredient comprising a carrier, in a concentration of greater than 10% by weight, and
- the carrier comprises water and/or an alcohol solvent, the alcohol preferably being chosen from ethanol or isopropanol.

**9.** Copolymer according to Claim 8, **characterized in that**:

- the carrier is water or a mixture of more than 50% by weight of water and of less than 50% by weight of alcohol,
- the concentration is at least 25% by weight and preferably at most 75% by weight.

**10.** Process for the preparation of a copolymer according to one of Claims 1 to 9, comprising the following stages:

stage I): the following is prepared:

- a (block A)-(block B') diblock copolymer, or
- a triblock or star copolymer of (core)-[(block A)-(block B')]$_x$ or (core)-[(block B')-(block A)]$_x$ architecture where x is a mean number of greater than or equal to 2,
where

- the block A comprises the units deriving from styrene, and
- the block B' comprises the units deriving from a $C_1$-$C_4$ alkyl acrylate,

stage I') optionally, for a triblock or star copolymer, the (core)-(block B') or (core)-(block A) bonds are split, so as to obtain a (block A)-(block B') diblock copolymer,
stage II) the block B' is hydrolyzed to give a block B in order to obtain the (block A)-(block B) diblock copolymer, the hydrolysis bringing about, if appropriate, for a triblock or star copolymer, splitting of the (core)-(block B') or (core)-(block A) bonds, so as to obtain a (block A)-(block B) diblock copolymer.

**11.** Process according to Claim 10, **characterized in that** stage I) is carried out by emulsion polymerization in water.

**12.** Process according to either one of Claims 10 and 11, **characterized in that**:

- during stage I, the (block A)-(block B') diblock copolymer is prepared by a process comprising the following intermediate stages Ia) and Ib):

Ia) a first block A is prepared by bringing together:

- $n_T$ mol of a transfer agent comprising a single transfer group,
- $n_A$ mol of styrene or a mixture of monomers comprising at least 90% by weight of styrene and where

$n_A/n_T > 5$ and preferably $< 5000$;
- and optionally a free radical initiator,

Ib) a second block B' is prepared in order to obtain a (block A)-(block B') diblock copolymer by bringing together:

- the block A obtained in the preceding stage,
- $n_B$ mol of a hydrolyzable $C_1$-$C_4$ alkyl acrylate or of a mixture of monomers comprising at least 90% by weight of the hydrolyzable $C_1$-$C_4$ alkyl acrylate so that $n_B/n_T > 5$ and preferably $< 5000$;
- and optionally a free radical initiator;
- during stage II), subsequent to stage I), the block B' is hydrolyzed to a degree T in moles of between 0.4 and 0.96 in order to obtain said (block A)-(block B) diblock copolymer, and
- $20\,000 \leq n_A/n_T M_A + M_{AA} n_B/n_T$
- $[TM_{AA}N_B + (1\text{-}T)M_B n_B]/[M_A n_A + TM_{AA} n_B + (1\text{-}T)M_B n_B] \geq 50\%$ where $M_A$ is the molar mass of the styrene or of the mixture of monomers comprising the styrene employed in stage Ia) and $M_B$ is the molar mass of the $C_1$-$C_4$ alkyl acrylate or of the mixture of monomers comprising the $C_1$-$C_4$ alkyl acrylate employed in stage Ib).

**13.** Process according to one of the preceding claims, **characterized in that** T is between 0.7 and 0.8; preferably, T is equal to 0.75.

**14.** Process according to one of Claims 10 to 13, **characterized in that**:

- $20\,000 \leq n_A/n_T M_A + M_{AA} n_B/n_T \leq 50\,000$.

**15.** Process according to one of Claims 10 to 14, **characterized in that**:

- $[TM_{AA}N_B + (1\text{-}T)M_B n_B]/[M_A n_A + TM_{AA} n_B + (1\text{-}T) M_B n_B] \geq 75\%$,
- preferably $[TM_{AA}N_B + (1\text{-}T)M_B n_B] / [M_A n_A + TM_{AA} N_B + (1\text{-}T)M_B n_B] \geq 94\%$,'
- preferably $94\% \leq [TM_{AA} n_B + (1\text{-}T)M_B n_B] / [M_A n_A + TM_{AA} n_B + (1\text{-}T)M_B n_B] \leq 97\%$.

**16.** Process according to one of Claims 10 to 15, **characterized in that** the measured average molecular weight of the (block A)-(block B') diblock copolymer is greater than or equal to 29 250 g/mol, preferably between 29 250 and 100 000 g/mol.

**17.** Process according to one of Claims 10 to 16, **characterized in that** a stage III) of deactivation of transfer groups carried by macromolecular chains and/or of purification of the (block A)-(block B) diblock copolymer and/or of destruction of hydrolysis and/or deactivation byproducts is carried out during and/or after stage II).

**18.** Process according to any one of Claims 10 to 17, **characterized in that** stage I) is carried out by controlled radical polymerization with a transfer agent comprising a transfer group of formula -S-CS-.

**19.** Process according to one of Claims 10 to 18, **characterized in that**, in stage Ia), use is made of a mixture of monomers comprising at least 90% by weight of styrene and up to 10% by weight of an anionic or nonionic hydrophilic comonomer, preferably at least 95% by weight of styrene and up to 5% by weight of methacrylic acid.

**20.** Process according to one of Claims 10 to 19, **characterized in that**, in stage Ib), use is made of a mixture of monomers comprising at least 90% by weight of the $C_1$-$C_4$ alkyl acrylate and up to 10% by weight of an ionic or nonionic hydrophilic comonomer, preferably at least 95% by weight of the $C_1$-$C_4$ alkyl acrylate and up to 5% by weight of methacrylic acid.

**21.** Process according to Claim 19 or 20, where the hydrophilic comonomer is methacrylic acid in the acid or salified form.

**22.** Process according to one of Claims 10 to 21, **characterized in that** the $C_1$-$C_4$ alkyl acrylate is ethyl acrylate.

**Patentansprüche**

1. Diblockcopolymer (Block A)-(Block B), wobei:

   - der Block A mindestens 90 Gewichts% an Einheiten umfasst, die sich von Styrol ableiten,
   - der Block B ein Block statistischer Zusammensetzung ist, der Folgendes umfasst:

     (a) 34 bis 95 Gewichts%, vorzugsweise 64 bis 75 %, an Einheiten, die sich von Acrylsäure ableiten, welche als Säure vorliegt oder in die Salzform überführt wurde, und
     (b) 5 bis 66 Gewichts%, vorzugsweise 25 bis 36 %, an Einheiten, die sich von einem $C_1$-$C_4$-Alkylacrylat ableiten

   - der Gewichtsanteil des Blocks B bezogen auf das Copolymer mindestens 50 % beträgt
   - das theoretische mittlere Molekulargewicht des Copolymers mindestens 20.000 g/mol beträgt und vorzugsweise im Bereich von 20.000 bis 50.000 g/mol liegt.

2. Copolymer nach Anspruch 1, **dadurch gekennzeichnet, dass** das Diblockcopolymer geradkettig ist und der Block B ein Block statistischer Zusammensetzung ist.

3. Copolymer nach einem beliebigen der Ansprüche 1 oder 2, **dadurch gekennzeichnet, dass** es sich bei dem $C_1$-$C_4$-Alkylacrylat um Ethylacrylat handelt.

4. Copolymer nach einem beliebigen der Ansprüche 1 bis 3, **dadurch gekennzeichnet, dass** der Block A und/oder der Block B bis zu 10 Gewichts%, vorzugsweise bis zu weniger als 5 Gewichts%, eines zusätzlichen hydrophilen Comonomers ionischer oder nichtionischer Art umfasst/umfassen.

5. Copolymer nach Anspruch 4, wobei es sich bei dem hydrophilen Comonomer um Methacrylsäure handelt, die als Säure vorliegt oder in die Salzform überführt wurde.

6. Copolymer nach einem der vorhergehenden Ansprüche, **dadurch gekennzeichnet, dass** der Gewichtsanteil des Blocks B bezogen auf das Copolymer mindestens 75 %, vorzugsweise mindestens 94 %, beträgt und vorzugsweise im Bereich von 94 bis 97 % liegt.

7. Copolymer nach einem der vorhergehenden Ansprüche, **dadurch gekennzeichnet, dass** es:

   - in feststofflicher oder trockener Form vorliegt, oder
   - in Form einer fließfähigen konzentrierten Zutat vorliegt, die einen Träger umfasst, in einer Konzentration von mehr als 10 Gewichts%.

8. Copolymer nach einem der vorhergehenden Ansprüche, **dadurch gekennzeichnet, dass**:

   - es in Form einer fließfähigen konzentrierten Zutat vorliegt, die einen Träger umfasst, in einer Konzentration von mehr als 10 Gewichts%, und
   - der Träger Wasser und/oder ein Alkohollösemittel umfasst, wobei der Alkohol vorzugsweise aus Ethanol oder Isopropanol ausgewählt ist.

9. Copolymer nach Anspruch 8, **dadurch gekennzeichnet, dass**:

   - es sich bei dem Träger um Wasser oder eine Mischung von mehr als 50 Gewichts% an Wasser und weniger als 50 Gewichts% an Alkohol handelt,
   - die Konzentration mindestens 25 Gewichts% und vorzugsweise höchstens 75 Gewichts% beträgt.

10. Verfahren zur Herstellung eines Copolymers nach einem der Ansprüche 1 bis 9, welches die folgenden Schritte umfasst:

    Schritt I): es wird Folgendes hergestellt:

    - ein Diblockcopolymer (Block A)-(Block B'), oder

- ein Triblock- oder Sterncopolymer mit dem Aufbau (Kern)-[(Block A)-(Block B')]$_x$ oder (Kern)-[(Block B')-(Block A)]$_x$, wobei x ein Zahlenmittelwert ist, der mindestens 2 beträgt,

wobei

- Block A die Einheiten umfasst, die sich von Styrol ableiten, und
- Block B' die Einheiten umfasst, die sich von einem $C_1$-$C_4$-Alkylacrylat ableiten,

Schritt I') bei einem Triblock- oder Sterncopolymer werden möglicherweise die (Kern)-(Block B')-oder (Kern)-(Block A)-Bindungen aufgebrochen, sodass ein Diblockcopolymer (Block A)-(Block B') erhalten wird,

Schritt II) der Block B' wird zu einem Block B hydrolysiert, um das Diblockcopolymer (Block A)-(Block B) zu erhalten, wobei die Hydrolyse bei einem Triblock- oder Sterncopolymer zu einem Aufbrechen der (Kern)-(Block B')- oder (Kern)-(Block A)-Bindungen führt, sodass ein Diblockcopolymer (Block A)-(Block B) erhalten wird.

**11.** Verfahren nach Anspruch 10, **dadurch gekennzeichnet, dass** der Schritt I) mittels einer Emulsionspolymerisation in Wasser durchgeführt wird.

**12.** Verfahren nach einem beliebigen der Ansprüche 10 bis 11, **dadurch gekennzeichnet, dass**:

- beim Schritt I ein Diblockcopolymer (Block A)-(Block B') mittels eines Verfahrens hergestellt wird, das die folgenden Zwischenschritte Ia) und Ib) umfasst:

Ia) es wird ein erster Block A hergestellt, indem Folgendes in Kontakt gebracht wird:

- $n_T$ Mol eines Übertragungsmittels, das eine einzige Übertragungsgruppe umfasst
- $n_A$ Mol an Styrol oder einer Mischung von Monomeren, die mindestens 90 Gewichts% an Styrol umfasst und wobei $n_A/n_T$ > 5 und vorzugsweise < 5.000
- und möglicherweise einen Initiator freier Radikale

Ib) es wird ein zweiter Block B' hergestellt, um ein Diblockcopolymer zu erhalten (Block A)-(Block B'), indem Folgendes in Kontakt gebracht wird:

- der Block A, der im vorhergehenden Schritt erhalten wurde,
- $n_B$ Mol eines hydrolysierbaren $C_1$-$C_4$-Alkylacrylats oder einer Mischung von Monomeren, die mindestens 90 Gewichts% eines hydrolysierbaren $C_1$-$C_4$-Alkylacrylats umfasst, sodass $n_B / n_T$ > 5 und vorzugsweise < 5.000 ist;
- und möglicherweise einen Initiator freier Radikale,
- beim Schritt II), der auf Schritt I) folgt, wird eine Hydrolyse des Blocks B' zu einem molaren Anteil T durchgeführt, der im Bereich von 0,4 bis 0,96 liegt, um das Diblockcopolymer (Block A)-(Block B) zu erhalten, und
- $20.000 \leq n_A/n_T\ M_A + M_{AA}\ n_B/n_T$
- $[T\ M_{AA}\ n_B + (1\text{-}T)\ M_B\ n_B] / [M_A n_A + T\ M_{AA}\ n_B + (1\text{-}T)\ M_B\ n_a] \geq 50\%$

wobei $M_A$ die Molmasse des Styrols oder der Mischung von Monomeren, die das Styrol umfasst und in Schritt Ia) eingesetzt wird, ist und $M_B$ die Molmasse des $C_1$-$C_4$-Alkylacrylats oder der Mischung von Monomeren, die das $C_1$-$C_4$-Alkylacrylat umfasst und in Schritt Ib) eingesetzt wird, ist.

**13.** Verfahren nach einem der vorhergehenden Ansprüche, **dadurch gekennzeichnet, dass** T im Bereich von zwischen 0,7 bis 0,8 liegt und T vorzugsweise gleich 0,75 ist.

**14.** Verfahren nach einem der Ansprüche 10 bis 13, **dadurch gekennzeichnet, dass**:

- $20.000 \leq n_A/n_T\ M_A + M_{AA}\ n_B/n_T \leq 50.000$.

**15.** Verfahren nach einem der Ansprüche 10 bis 14, **dadurch gekennzeichnet, dass**:

- $[T\ M_{AA}\ n_B + (1\text{-}T)\ M_B\ n_B] / [M_A n_A + T\ M_{AA}\ n_B + (1\text{-}T)\ M_B\ n_B] \geq 75\%$,
- vorzugsweise $[T\ M_{AA}\ n_B + (1\text{-}T)\ M_B\ n_B] / [M_A n_A + T\ M_{AA}\ n_B + (1\text{-}T)\ M_B\ n_B] \geq 94\%$,

- vorzugsweise 94% $\leq$ [T $M_{AA}$ $n_B$ + (1-T) $M_B$ $n_B$] /[$M_A n_A$ + T $M_{AA}$ $n_B$ + (1-T) $M_B$ $n_B$] $\leq$ 97%.

16. Verfahren nach einem der Ansprüche 10 bis 15, **dadurch gekennzeichnet, dass** der mittlere Messwert des Molekulargewichts des Diblockcopolymers (Block A)-(Block B') mindestens 29.250 g/mol beträgt und vorzugsweise im Bereich von 29.250 bis 100.000 g/mol liegt.

17. Verfahren nach einem der Ansprüche 10 bis 16, **dadurch gekennzeichnet, dass** während und/oder nach dem Schritt II) ein Schritt III) durchgeführt wird, der darin besteht, die Übertragungsgruppen, welche von den makromolekularen Ketten getragen werden, zu inaktivieren und/oder das Diblockcopolymer (Block A)-(Block B) aufzureinigen und/oder die Hydrolysenebenprodukte zu beseitigen und/oder eine Inaktivierung zu bewirken.

18. Verfahren nach einem beliebigen der Ansprüche 10 bis 17, **dadurch gekennzeichnet, dass** der Schritt I) durch radikalische Polymerisation durchgeführt wird, wobei diese mit einem Übertragungsmittel gesteuert wird, das eine Übertragungsgruppe der Formel -S-CS- umfasst.

19. Verfahren nach einem der Ansprüche 10 bis 18, **dadurch gekennzeichnet, dass** in Schritt Ia) eine Mischung von Monomeren eingesetzt wird, die mindestens 90 Gewichts% an Styrol und bis zu 10 Gewichts% eines hydrophilen Comonomers ionischer oder nichtionischer Art, vorzugsweise mindestens 95 Gewichts% an Styrol und bis zu 5 Gewichts% an Methacrylsäure, umfasst.

20. Verfahren nach einem der Ansprüche 10 bis 19, **dadurch gekennzeichnet, dass** in Schritt Ib) eine Mischung von Monomeren eingesetzt wird, die mindestens 90 Gewichts% an $C_1$-$C_4$-Alkylacrylat und bis zu 10 Gewichts% eines hydrophilen Comonomers ionischer oder nichtionischer Art, vorzugsweise mindestens 95 Gewichts% an $C_1$-$C_4$-Alkylacrylat und bis zu 5 Gewichts% an Methacrylsäure, umfasst.

21. Verfahren nach Anspruch 19 oder 20, wobei es sich bei dem hydrophilen Comonomer um Methacrylsäure handelt, die als Säure vorliegt oder in die Salzform überführt wurde.

22. Verfahren nach einem der Ansprüche 10 bis 21, **dadurch gekennzeichnet, dass** es sich bei dem $C_1$-$C_4$-Alkylacrylat und Ethylacrylat handelt.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0116187 A
- WO 9858974 A
- WO 0075207 A
- WO 0142312 A
- WO 9801478 A
- WO 9931144 A
- WO 0226836 A
- WO 0210223 A
- WO 9903894 A
- WO 9630421 A
- WO 0039169 A
- WO 0037507 A

**Littérature non-brevet citée dans la description**

- **OTU et al.** *Makromol. Chem. Rapid. Commun.,* 1982, vol. 3, 127
- **TATEMOTO et al.** Jap. Daikin Kogyo Co ltd, 1975, vol. 50, 127, 991
- **MATYJASZEWSKI et al.** *Macromolecules,* 1995, vol. 28, 2093
- **D. BRAUN et al.** *Dans Macromol. Symp.,* 1996, vol. 111, 63
- **WAYLAND et al.** *J.Am.Chem.Soc.,* 1994, vol. 116, 7973
- **CHRIT L ; HADJUR C ; MOREL S ; SOCKALINGUM G.D. ; LEBOURDON G ; LEROY F ; MANFAIT M.** In vivo chemical investigation of Human skin using a confocal Raman Optic microprobe. *J. Biomed Opt,* 2005
- **CASPERS PJ ; LUCASSEN GW ; CARTER EA ; BRUINING HA ; PUPPELS GJ.** In vivo confocal Raman microspectroscopy of the skin: non invasive determination of molecular concentration profiles. *Journal of Investigative Dermatology,* 2001, vol. 116 (3), 434-442